# EUROPEAN PATENT SPECIFICATION

(11) **EP 4 227 896 B1**
(45) Date of publication and mention of the grant of the patent: **07.01.2026**
(21) Application number: 22156310.9
(22) Date of filing: 11.02.2022
(51) Int. Cl.: G06T 7/00

(54) **COMPUTER-IMPLEMENTED METHOD FOR PROCESSING A THREE-DIMENSIONAL MEDICAL IMAGE DATA SET, DEVICE, COMPUTER PROGRAM AND COMPUTER-READABLE STORAGE MEDIUM**
COMPUTERIMPLEMENTIERTES VERFAHREN ZUR VERARBEITUNG EINES DREIDIMENSIONALEN MEDIZINISCHEN BILDDATENSATZES, VORRICHTUNG, COMPUTERPROGRAMM UND COMPUTERLESBARES SPEICHERMEDIUM
PROCÉDÉ MIS EN OEUVRE PAR ORDINATEUR POUR LE TRAITEMENT D'UN ENSEMBLE DE DONNÉES D'IMAGES MÉDICALES TRIDIMENSIONNELLES, DISPOSITIF, PROGRAMME INFORMATIQUE ET SUPPORT D'INFORMATIONS LISIBLE PAR ORDINATEUR

(43) Date of publication of application: 16.08.2023
(73) Proprietor: Siemens Healthineers AG, 91301 Forchheim (DE)
(72) Inventor: K.A, Anuraj, 560100 Bangalore (IN); Muthusamy, Thendral, 560100 Bangalore (IN); Sundarapandian, Manivannan, 560030 Bangalore (IN)
(74) Representative: Siemens Healthineers Patent Attorneys

(56) References cited:
- WANG YIFAN ET AL: "Correlation between White Matter Hyperintensities Related Gray Matter Volume and Cognition in Cerebral Small Vessel Disease", JOURNAL OF STROKE AND CEREBROVASCULAR DISEASES, DEMOS PUBLICATIONS, NEW YORK, NY, US, vol. 29, no. 12, 6 September 2020 (2020-09-06), XP086350649, ISSN: 1052-3057, [retrieved on 20200906], DOI: 10.1016/J.JSTROKECEREBROVASDIS.2020.105275
- NESVAG R ET AL: "The relationship between symptom severity and regional cortical and grey matter volumes in schizophrenia", PROGRESS IN NEURO-PSYCHOPHARMACOLOGY & BIOLOGICAL PSYCHIATRY, ELSEVIER, GB, vol. 33, no. 3, 30 April 2009 (2009-04-30), pages 482 - 490, XP026072738, ISSN: 0278-5846, [retrieved on 20090204], DOI: 10.1016/J.PNPBP.2009.01.013
- RAJAGOPALAN PRIYA ET AL: "Mapping creatinine- and cystatin C-related white matter brain deficits in the elderly", NEUROBIOLOGY OF AGING, TARRYTOWN, NY, US, vol. 34, no. 4, 20 November 2012 (2012-11-20), pages 1221 - 1230, XP028962772, ISSN: 0197-4580, DOI: 10.1016/J.NEUROBIOLAGING.2012.10.022
- LEE J S ET AL: "Neuroanatomical correlates of trait anhedonia in patients with schizophrenia: A voxel-based morphometric study", NEUROSCIENCE LETTERS, ELSEVIER, AMSTERDAM, NL, vol. 489, no. 2, 4 February 2011 (2011-02-04), pages 110 - 114, XP027600887, ISSN: 0304-3940, [retrieved on 20110113], DOI: 10.1016/J.NEULET.2010.11.076
- HUMPHREYS KATHRYN L ET AL: "Stressful Life Events, ADHD Symptoms, and Brain Structure in Early Adolescence", JOURNAL OF ABNORMAL CHILD PSYCHOLOGY, PLENUM PRESS, NEW YORK, NY, US, vol. 47, no. 3, 21 May 2018 (2018-05-21), pages 421 - 432, XP036716200, ISSN: 0091-0627, [retrieved on 20180521], DOI: 10.1007/S10802-018-0443-5
- WEST REBECCA K ET AL: "Higher BMI is associated with smaller regional brain volume in older adults with type 2 diabetes", DIABETOLOGIA, SPRINGER BERLIN HEIDELBERG, BERLIN/HEIDELBERG, vol. 63, no. 11, 29 August 2020 (2020-08-29), pages 2446 - 2451, XP037258384, ISSN: 0012-186X, [retrieved on 20200829], DOI: 10.1007/S00125-020-05264-8
- FRANZ CAROL E ET AL: "Posttraumatic stress symptom persistence across 24 years: association with brain structures", BRAIN IMAGING AND BEHAVIOR, SPRINGER US, BOSTON, vol. 14, no. 4, 4 March 2019 (2019-03-04), pages 1208 - 1220, XP037201873, ISSN: 1931-7557, [retrieved on 20190304], DOI: 10.1007/S11682-019-00059-X
- ADDIEGO FLORENCIA MARTINEZ ET AL: "Subcortical brain segment volumes in Gulf War Illness and Myalgic Encephalomyelitis/Chronic Fatigue Syndrome", LIFE SCIENCE, PERGAMON PRESS, OXFORD, GB, vol. 282, 29 June 2021 (2021-06-29), XP086713776, ISSN: 0024-3205, [retrieved on 20210629], DOI: 10.1016/J.LFS.2021.119749

## Description

The invention concerns a computer-implemented method for processing a respective three-dimensional medical image data set for at least one patient, wherein the image data set at least partially depicts the brain of the respective patient. Additionally, the invention concerns a device for processing a respective three-dimensional medical image data set, a computer program and a computer-readable storage medium.

Modern medical imaging techniques, especially magnetic resonance imaging, allow for a high-quality mapping of the brain morphometry. Analyzing the brain morphometry can e.g. be useful in the context of diagnosing and treating neurodegenerative diseases such as Alzheimer disease, Dementia, Parkinson, Multiple Sclerosis, etc.

One possible approach to brain morphometry analysis is to perform an automatic or manual segmentation of the brain in an image data set and try to identify atrophied brain segments based on the properties of the individual segments. Such an approach can be noticeably sped up and simplified when an automatic brain region segmentation is used. Multiple approaches to automatic brain region segmentation are known. An overview of common brain segmentation techniques is e.g. given in Huizinga W. et al. (2021) Differences Between MR Brain Region Segmentation Methods: Impact on Single-Subject Analysis, Front. Big Data 4:577164, doi: 10.3389.

Even when assisted by an automatic segmentation of the image data set, an evaluation of the image data set, e.g. to determine if degeneration is present in a given brain segment and/or which brain segments are affected by degeneration, is laborious and can be rather error prone.

Non Patent Literature "Correlation between White Matter Hyperintensities Related Gray Matter Volume and Cognition in Cerebral Small Vessel Disease", by WANG YIFAN ET. AL. in JOURNAL OF STROKE AND CEREBROVASCULAR DISEASES, DEMOS PUBLICATIONS, NEW YORK, NY, US, vol. 29, no. 12, 6 September 2020, discloses a method for determining existing correlations between grey matter volume in different brain regions and cognitive assessment scores, based on MRI image acquisitions.

Non Patent Literature "The relationship between symptom severity and regional cortical and grey matter volumes in schizophrenia" by NESVAG R. ET. AL. in PROGRESS IN NEURO-PSYCHOPHARMACOLOGY & BIOLOGICAL PSYCHIATRY, ELSEVIER, GB, vol. 33, no. 3, 30 April 2009, pages 482-490, discloses a method for analyzing relationships between brain volumes and symptom factors by partial correlations, controlling for age, gender, dose, type of antipsychotic medication, and intracranial volume, wherein brain volumes are computed from segmented MRI images.

Non Patent Literature "Mapping creatinine- and cystatin C-related white matter brain deficits in the elderly", by RAJAGOPALAN PRIYA ET. AL. in NEUROBIOLOGY OF AGING, TARRYTOWN, NY, US, vol. 34, no. 4, 20 November 2012 (2012-11-20), pages 1221-1230, discloses a method to find correlations between voxel-wise cerebral volumes and brain tissue excess (depending on the brain region) with respect to an average brain template, wherein brain volumes are computed from segmented MRI images.

Non Patent Literature "Neuroanatomical correlates of trait anhedonia in patients with schizophrenia: A voxel-based morphometric study", by LEE J. S. ET. AL. in NEUROSCIENCE LETTERS, ELSEVIER, AMSTERDAM, NL, vol. 489, no. 2, 4 February 2011, pages 110-114, discloses a method to characterize the association between trait anhedonia and regional gray matter volume in patients with schizophrenia, based on MRI image acquisitions.

The problem to be solved is therefore to provide a computer-implemented method that provides additional information and/or support to users when analyzing three-dimensional medical image data of a brain, especially for detecting an atrophy and/or a different degeneration of brain segments.

The problem is solved by the computer-implemented method discussed above, comprising the steps performed for each patient:
- receiving or acquiring the image data set for the respective patient,
- selecting a respective image segment in the image data set that corresponds to a respective one of multiple given brain segments,
- determining at least one respective parameter for each selected image segment,
- selecting a selected group of brain segments for which a selection condition is fulfilled, wherein the selection condition depends on the parameter determined for the respective image segment corresponding to the respective brain segment,
- receiving a patient data record describing the presence of at least one registered symptom for the respective patient,
- for each brain segment in the selected group determine a respective correlation result for each registered symptom using a given correlation algorithm, and
- determining a correlation information based on the determined correlation results.

By using both the image data set and the patient data record to determine a respective group of brain segments and then comparing these groups, it can be automatically tested, whether there is a good correlation between registered symptoms given by the patient data record and brain segments for which the analysis of the image data set indicates an atrophy or another deficiency.

This correlation can be used to validate the automatic analysis of the image data set. It is e.g. possible to output the correlation information or an output information determined from this correlation information with the determined parameters for the brain segments and/or with a first estimation, if a certain brain segment is affected. This can e.g. be useful in borderline cases, where the determined parameter e.g. only lies slightly outside of a normal parameter range for this parameter and therefore is only a slight indication pointing towards a potential affection of a brain segment. In this case, a user of the inventive method can immediately recognize, if an affection would fit the symptoms or not, based on the correlation information.

In other cases, the correlation information can directly be used to influence the final detection of affected brain segments, e.g. by not considering brain segments to be affected or by labeling brain segments as only potentially affected, when a correlation value for the respective brain segment described by the correlation information has a certain value or lies within a certain value range.

On the other hand, the determination of the correlation information can serve as a tool for better understanding the correlation of affected brain segments and the presence of certain symptoms. It is e.g. possible to determine statistics concerning the correlation of an affection of a certain brain segment with an individual symptom or a group of symptoms. This will be discussed in more detail below. Statistics concerning the correlation information can then e.g. be displayed or stored as part of the output of a processing algorithm for the medical image data set and/or can be used to modify the correlation algorithm once a sufficient amount of data was analyzed.

The correlation information can describe the presence and/or degree of correlation between the result of the image data set analysis, especially the detection of atrophied brain segments, and the registered symptom or symptoms given by the patient data record. The selected group of brain segments can comprise a single brain segment or multiple brain segments. When the method is applied to a patient without symptoms or without an atrophy of the brain, the selected group could be empty. In case of an empty selected group and/or in the absence of registered symptoms, the method can terminate with an error condition, since there can be no correlation in this case. Typically, the method should only be applied to patients exhibiting symptoms indicating an issue with at least one brain segment.

The correlation algorithm can be provided based on literature and/or statistics concerning previous cases. The correlation algorithm can be or comprise correlation rule that describes an affection of which brain segment can cause a given symptom. The selection rule can e.g. be implemented as a look-up table that lists all relevant brain segments for a given symptom. Alternatively or additionally, the correlation algorithm can e.g. output a measure for the relevance of the respective symptom, when a respective segment is affected as the correlation result. The correlation algorithm can e.g. assign a respective weight for each brain segment to a respective symptom.

It is possible to initially use an equal probability assumption, wherein it is assumed that each symptom that can be caused by an affection of a brain segment is present with the same probability. Therefore, initially the correlation algorithm can e.g. output the same correlation result for a respective brain segment for each registered symptom that could be caused by an affection of this brain segment and a different value, e.g. zero, for the other symptoms. Alternatively, it is e.g. possible to assign different weights to different symptoms based on literature or statistics concerning previous patients. After a sufficient number of processed image data sets the correlation algorithm can then be modified to provide different output values based e.g. on a statistical analysis of previously determined correlation results and/or correlation information.

The correlation rule could e.g. describe, that dizziness can be caused by an affection of the brain stem and/or the cerebellum. Dysarthria could be caused by an affection of the corpus collosum and/or the cerebellum, slurred speech can be caused by an affection of the corpus collosum and/or the cerebellum and/or the hippocampus, insomnia can be caused by an affection of the brain stem and/or the thalamus and tremors can be caused by an affection of the cerebellum and/or the putamen and/or the caudate. For simplicity's sake only a few brain segments and relevant symptoms are discussed above. The used correlation algorithm can concern a lot more brain segments and/or symptoms, e.g. 42 brain segments.

The correlation information or output information determined from the correlation information determined for multiple patients can be provided via an output interface that can be a software interface or a hardware interface. Such information can e.g. be output on a display device, stored on a storage device, passed to a further device or program for further processing, etc.

The selection of the respective image segment that corresponds to a respective one of multiple given brain segments can easily be achieved, when the image data set is already provided as a segmented image data set with labels labeling various image segments as certain brain segments. Alternatively, the image data set can be segmented and labelled as a step in the inventive method. Multiple approaches to segmenting and labelling medical image data sets concerning the brain are well-known and are e.g. discussed in the initially cited article by Huizinga W. et al. and the references given therein. Therefore, the segmentation and labelling of such image data sets will not be described in detail.

The image data set can be based on or acquired by magnetic resonance tomography. Multiple measurement sequences are well-suited for the segmentation approaches known from the prior art. E.g. a T₁-weighted tomography can be used. During the development of the invention, the T₁-MPRAGE sequence was found to be especially suited. Alternatively, e.g. a T₁-SPACE or T₂-FLAIR sequence could be used. In principle, the inventive approach could also be used for image data sets acquired by computer tomography, PET-imaging or other imaging approaches.

The correlation information can describe a respective correlation value for each brain segment in the selected group, wherein either the respective correlation result is a number and the respective correlation value is the sum of the correlation results determined for the respective brain segment or depends on this sum, or wherein the respective correlation result is a Boolean value and the correlation value is a logical combination of the correlation results determined for the respective brain segment.

It is e.g. possible to use a "or"-combination of the Boolean correlation results to determine if the selection of the brain segment correlates to any one of the registered symptoms or to use an "and"-combination to determine if all registered symptoms can be explained by an affection of the respective brain segment. A summation of correlation values can e.g. provide a correlation value describing how many symptoms that can be caused by an affection of the respective brain segment where registered or to sum the weights for the registered symptoms, that can e.g. add to 1 or some other fixed value when all symptoms that can be caused by an affection of a given brain segment where registered.

By determining distinct correlation values for the brain segments in the selected group, a more detailed analysis can be possible after determining correlation information for a multitude of patients, e.g. at least 1000 or at least 10,000 patients. Such correlation values can e.g. be used for a determination of a probability for an affection of a certain brain segment causing certain symptoms. Determining correlation values for individual brain segments can also be useful for modifying the correlation algorithm, as described later.

The parameter can be a measure for an absolute volume of the selected image segment or for a relative volume of the selected image segment with respect to at least one further image segment, that especially corresponds to the complete brain. Additionally or alternatively, the selection condition can be a comparison of the respective parameter with a respective given threshold value. The previous features are especially advantageous when brain segments with an atrophy should be selected as the selected group. An atrophy of a brain segment reduces the volume of this brain segment. While this is in principle detectable based on the absolute volume, the absolute volume of brain segments is also influenced by a multitude of further factors and it can therefore be advantageous to use the relative volume instead.

The respective threshold value can be given based on the patient data record and/or on an age and/or gender of the respective patient. It is e.g. possible, that the patient data record additionally describes the age and/or gender and that this information is extracted to determine the threshold value. It was found that the age and gender of the patient does have a strong influence on the expected relative volume of the brain segment and it is therefore advantageous to take these additional parameters into consideration. The threshold value can be determined from the given parameter or parameters using a lookup table or a function. The threshold value can be based on literature or on previous statistics and be directly used in the lookup table or an interpolation or regression can be used to provide a function for determining the threshold.

The at least one registered symptom can be selected from a list of given symptoms, wherein the correlation algorithm prescribes a given correlation result for each of the given symptoms for each given brain segment. The correlation algorithm can e.g. be implemented as a lookup table.

The sum of the correlation results for all given symptoms for each respective brain segment can be the same, especially equal to 1. This is especially relevant when the respective correlation value is the sum of the correlation results for the respective brain segment or depends on this sum, since the presence of all given symptoms that are expected to be caused by an affection of a brain segment as registered symptoms will then result in this sum having a known value, especially 1.

The respective correlation information ca be determined for multiple patients, wherein the respective correlation information describes a respective correlation value for each brain segment in the selected group of brain segments, wherein the patients are grouped into multiple subgroups, wherein each of the subgroups corresponds to a specific given brain segment and comprises all patients for which the selected group of brain segments comprises a respective specific given brain segment, wherein an average correlation value is determined for each of the subgroups by adding the correlation values for the respective specific brain segment for this subgroup and dividing this sum by the number of patients in the subgroup.

If, for example, the correlation values are chosen to be either 1 or 0 or between 0 and 1, a percentage value for the correlation can be calculated by multiplying the average correlation value by 100%. This percentage value indicates a probability or a robustness of the correlation within the patient cohort.

The discussed percentage value or some other value correlated with the average correlation value can be used as an output, e.g. displayed or stored. It is e.g. possible to include this value in a table that can e.g. list all brain segments or brain segments that are members of the selected group with added information to support a user.

The added information can e.g. be the absolute and/or relative volume, or in more general terms the determined parameter, a normative range for the parameter, e.g. for the absolute and/or relative volume, possible symptoms caused by an affection of the respective brain segment and the confidence level given by or calculated from the average correlation value. Additionally or alternatively, such a table could list an expected recovery time, when a certain brain segment is affected, e.g. atrophied. A possible approach for determining such an expected recovery time will be discussed later.

The output, e.g. the discussed table, is preferably reviewed by a radiologist or another user experienced in analyzing medical image data sets before further usage. A user might e.g. add additional brain segments to the table, remove brain segments or edit the additional information.

A high average correlation value determined for a given brain segment indicates, that an affection of this brain segment will have a high probability of causing known symptoms, wherein a very low average correlation value for a given brain segment will indicate, that an affection of this brain segment detected by analyzing an image data set will only rarely cause expected symptoms or only a fraction of the known possible symptoms. Such information is highly relevant concerning further diagnosis and/or treatment steps and therefore very useful to a user of the method. It can also be used as a statistical foundation to either modify the correlation rule or algorithm and therefore the expected correlation between the affected brain segment and symptoms and/or the selection condition, by e.g. modifying a threshold for the relative volume at which an atrophy is detected.

The average correlation values can be determined separately for different patient cohorts. This might e.g. be useful to determine differences between the correlation of certain atrophied brain regions and symptoms that might appear in different regions, for different genders and/or for different age groups. This can be useful to modify the discussed method for the use for specific groups, e.g. by using a modified selection condition and/or correlation algorithm. Such data is also highly relevant for research.

The determination of the correlation information can be repeated using a modified correlation algorithm for at least one further patient, wherein the modified correlation algorithm depends on the correlation information and/or correlation results for at least one patient. Preferably, the modified correlation algorithm depends on the correlation information and/or correlation results for multiple patients, e.g. for at least 1000 patients or for at least 10,000 patients. A modification of the correlation algorithm can e.g. only be performed after all relevant data was reviewed by a medical expert, e.g. a radiologist. It is e.g. possible to allow for a review of proposed changes to the correlation algorithm by such an expert or a group of experts or to review the individual group selections and/or correlation results and/or correlation values determined for the different patients by the expert or the group of experts.

Possible modifications of the correlation algorithm include e.g. increasing or decreasing the correlation results provided for at least one combination of a brain segment and a symptom. As an example, a very low average correlation value for a given brain segment can indicate, that an atrophy of this brain segment causes a symptom that is currently not taken into account in the correlation algorithm, e.g resulting in a correlation result of zero of false for this pairing. It is then e.g. possible to select patients that show no correlation of any present symptom for this brain segment and select the most common symptom that cannot be correlated to any other affected brain segment for the respective patient. The correlation result for this symptom can be increased for the respective brain segment, e.g. by modifying a used look-up table.

The respective patient data record can be processed by natural language processing to determine the presence of at least one registered symptom. The output of the natural language processing, namely the symptom or symptoms, can then in principal be directly processed by the correlation algorithm. Since natural language processing can lead to errors in certain cases, it can be advantageous however, to first allow for a review of the determined symptoms by a user, e.g. by outputting them on a display device and allowing for a user to either modify the list of symptoms or accept it without changes. Algorithms for natural language processing of patient data records in natural language are in principle well known in the art and will not be described in detail. It is e.g. possible to use solutions based on machine learning that can be specifically trained for medical vocabulary.

For multiple patients, the time of the acquisition of the image data set for the respective patient can be recorded and a respective further image data set can be acquired for the same patient repeatedly, until a recovery condition is fulfilled, wherein the recovery condition is fulfilled or can only be fulfilled when the selection condition is not fulfilled for at least one brain segment in the most recently recorded further image data set while this brain segment was selected for the selected group and/or the correlation result for this brain segment was equal to a given value or in a given value range when determining the correlation information for the image data set for the same respective patient, wherein an assumed recovery time is determined as the time difference between the time of the acquisition of the image data set and the time of the acquisition of the further image data set for which the recovery condition was fulfilled and wherein an average recovery time is calculated by averaging the assumed recovery time of the multiple patients or of a subgroup of the multiple patients.

The time period between the acquisition of the image data set and the further image data set and/or the repetition time between respective acquisitions of the further image data set can be e.g. several days or weeks or even multiple months. Since such an acquisition of further image data sets is typically a part of a therapy for supervising the recovery of the respective patient from his or her condition, the average recovery time can essentially be determined in the background without additional effort by the user.

The average recovery time can e.g. be part of the information given to the user via a display device, e.g. in a table as discussed above, when analyzing an image data set for a patient. Determining average recovery times for different subgroups of the patients can e.g. allow for a comparison of recovery times in different patient cohorts and/or for different treatment approaches, e.g. used in different groups of hospitals or by different medical professionals.

Besides the inventive computer-implemented method, the invention concerns a device for processing a respective three-dimensional medical image data set for at least one patient, wherein the device comprises means for carrying out the inventive computer-implemented method. The device can comprise an interface for receiving input data, especially the image data set and/or the patient data record, and/or an interface for providing output data, e.g. the correlation information, the average correlation value and/or the average recovery time.

The output interface can e.g. output the data to a display, e.g. in the form of the previously discussed table. Additionally or alternatively, output data can e.g. be stored on a storage device and/or be transferred to a different device, e.g. via network, and/or a further program for additional processing. The respective interface can be a hardware interface, e.g. a network connection, or a software interface for exchanging data between different programs or program parts.

The device can be implemented by using a data processing unit to execute a computer program implementing the method. The data processing unit can e.g. be a workstation, a server, a cloud-based solution or an embedded device that can e.g. be integrated into a medical imaging device.

Additionally, the invention concerns a computer program comprising instructions which, when the program is executed by a data processing unit, causes the data processing unit to carry out the inventive method.

Additionally, the invention concerns a computer-readable storage medium having stored thereon a computer program according to the present invention.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a flowchart of an exemplary embodiment of a computer-implemented method for processing a respective three-dimensional medical image data set for at least one patient, additionally showing relevant algorithms and data structures,
- Fig. 2: relevant data structures and their interaction for determining an average correlation value in an exemplary embodiment of the inventive method,
- Fig. 3: a flowchart for the determination of an average recovery time, also showing relevant algorithms and data structures, in an exemplary embodiment of the inventive method, and
- Fig. 4: an exemplary embodiment of the device for processing a respective three-dimensional medical image data set for at least one patient and additional components that can be used in conjunction with such a device.

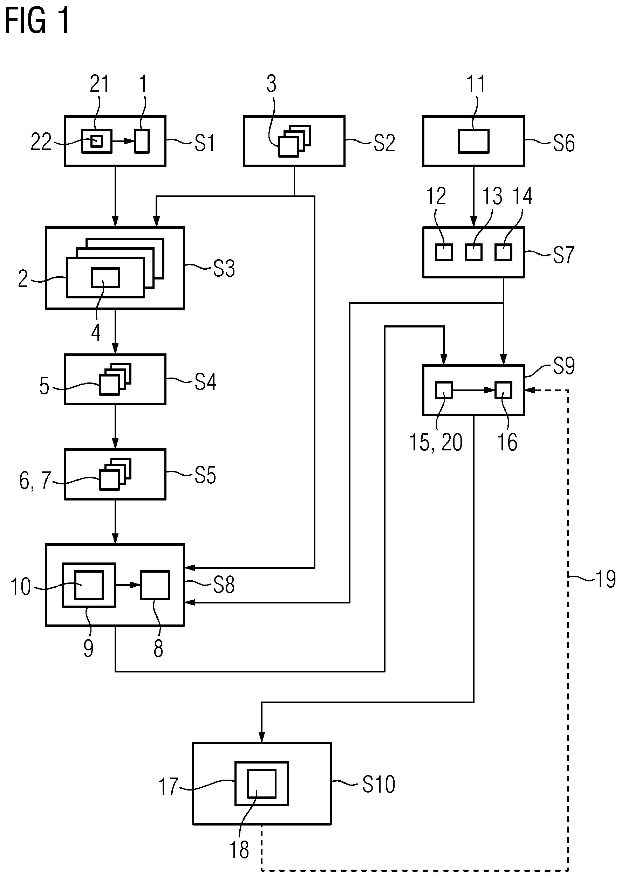

Fig. 1 shows a flowchart for a computer-implemented method for processing a respective three-dimensional medical image data set 1 for at least one patient 21, wherein the image data set 1 at least partially depicts a brain 22 of the respective patient 21. In step S1, the image data set 1 for the respective patient 21 is either acquired using a medical imaging device, e.g. a magnetic resonance tomograph, or is received from a different source, e.g. read from a data base.

In step S2, a list of relevant brain segments 3 is read in. This list can e.g. be hardcoded as part of a computer program that implements the method or can e.g. be read in as configuration information. The method can take a multitude of brain segments into consideration. E.g. more than twenty or more than forty brain segments.

In step S3, for each of the brain segments 3 a respective image segment 2 that corresponds to the respective brain segments 3 is selected. In a preferred embodiment, the image data set 1 is automatically segmented and the different segments 2 are automatically labelled with a respective label 4. The respective image segment 2 can then simply be selected by choosing the image segment with the label 4 corresponding to the respective brain segment 3. In an alternative embodiments, it would also be possible to perform a manual or semi-automatic segmentation and/or labeling of the image data set 1 or to already provide a segmented image data set 1, wherein the different segments are labelled. The segmentation and the labelling of the image data set could already be performed prior to the beginning of the discussed method.

In step S4, an absolute volume 5 is determined for each of the segments 2. In the simplest case, the absolute volume 5 can simply be the number of voxels in the respective segment 2. Since the voxel volume is the typically known, it can be advantageous to determine the absolute volume 5 in units that a more familiar to the user and/or more comparable between different image data sets, e.g. in milliliters.

As already discussed in the general part of the description, a highly relevant purpose of the image processing of medical image data sets of the brain is the detection of atrophied brain segments. Since the volume of an atrophied brain segment is typically reduced in comparison to a healthy brain, such brain segments 3 could in principle be directly detected using the absolute volume 5.

Since the absolute volume 5 is influenced by a multitude of other properties of the patient, it is, however, preferable to calculate a relative volume 6 in step S5, e.g. by dividing the absolute volume 5 by the complete volume of the brain 22 and therefore by the volume calculated by adding the absolute volumes 5 of all image segments 2 depicting brain segments 3. While this relative volume 6 still varies between different patients, the variation is a lot more limited than the variation of the absolute volume 5, especially when taking the age 13 and/or gender 14 of the respective patient 21 into account. A robust detection of atrophied brain segments 3 can therefore be achieved based on the relative volume 6 that is used as a parameter 7 in the selection condition 9 discussed later with reference to Step S8.

In step S6, the patient data record 11 is received, e.g. read from a patient data base. In principle, the patient data record 11 could directly describe relevant information, namely at least one registered symptom 12 of a respective patient 21 and optionally the age 13 and/or gender 14, in a machine-readable format.

Since patient data records 11 are often written by medical professionals in natural language, it can, however, be advantageous to use natural language processing in step S7 to determine the at least one registered symptom 12 and optionally the age 13 and/or the gender 14. The result of the natural language processing can preferably be reviewed by a medical practitioner prior to further usage to avoid errors.

In step S8, a selected group 8 of brain segments 3 for which a selection condition 9 is fulfilled is selected from the brain segments 3. The selection condition 9 depends on at least one previously determined parameter 7 of the respective image segment 2 corresponding to the respective brain segment 3. In the example, the relative volume 6 of the respective image segment 2 is used as parameter 7. Additionally or alternatively, it would also be possible to use different parameters, e.g. the absolute volume 5, a measure for the density of the tissue and/or a water- and/or fat content in the given image segment 2, etc.

The selection condition 9 used in the example compares the value of the parameter 7 with a threshold value 10 that is preferably determined based on the age 13 and/or gender 14 of the respective patient 21. Appropriate threshold values 10 for a given gender 14 and age group can be determined from literature or statistics over previous measurements and e.g. be stored in a look-up table.

The steps S9 and S10 serve to automatically analyze, whether the result of the image analysis, in the example the selection of the atrophied brain segments 3, correlates to the at least one registered symptom 12 described by the patient data record 11.

For this purpose, a respective correlation result 16 is determined for each possible pair of a brain segment 3 from the selected group 8 and a registered symptom 12, using a correlation algorithm 15. The correlation algorithm 15 can e.g. be implemented by using a look-up table providing the correlation result 16 for each possible pair.

In step S10, a correlation information 17 is determined based on the correlation results that were determined in step S9. In the example the correlation information 17 comprises a respective correlation value 18 for each brain segment 3 in the selected group 8. The respective correlation value 18 ca e.g. be determined by adding all correlation results 16 that where determined for the respective brain segment and therefore especially one correlation result 16 per registered symptom 12.

As previously discussed, brain segments 3 that are members of the selected group 8 are brain segments for which an affection, e.g. an atrophy, is determined by image processing. Therefore, the correlation information provides an information, how well the result of the image analysis matches the registered symptom 12 or symptoms 12. As already discussed in detail in the general part of the description, the correlation information can therefore be used to validate the image analysis and/or additional information can be provided to a user by evaluating correlation information collected for a multitude of patients, wherein the additional information is e.g. useable to support the user in determining further steps concerning the diagnoses and/or treatment of a brain condition and/or for research purposes.

In an advantageous embodiment, the correlation information 17 describes for each brain segment 3 in the selected group 8, whether the respective brain segment 3 is expected to cause any or all of the registered symptoms. In this case, the correlation information can e.g. describe a correlation value 18 for each brain segment 3 of the selected group that can e.g. be 1 when all expected symptoms are present and 0 when none of the expected symptoms are present. If only some of the expected symptoms are present, the correlation value can have an intermediate value. Such a correlation information or correlation value is highly relevant, since e.g. a very low correlation value can indicate, that the detected affection of this brain segment does not cause any expected symptoms.

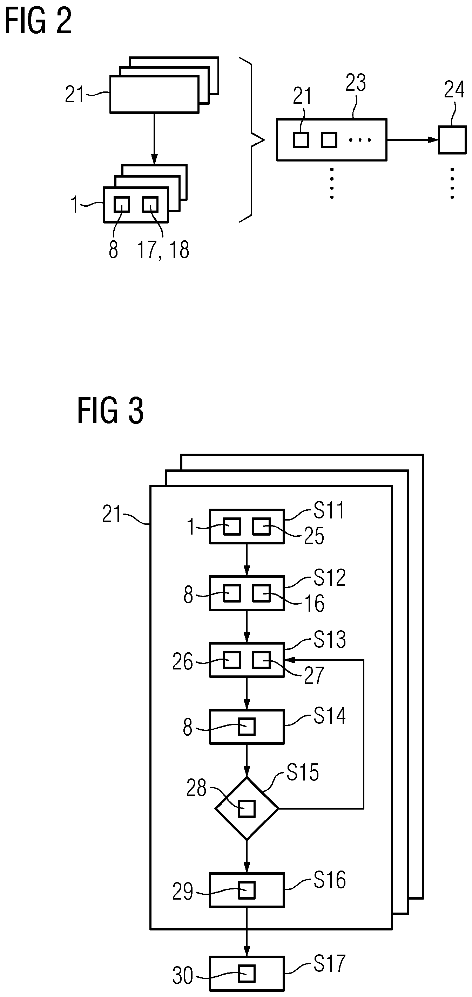

This can either indicate, that this brain segment 3 is not actually affected or at least not affected in a way that requires treatment or that the affection of this brain segment might require an update of the correlation between symptoms 12 and brain segments 3 causing these symptoms when affected, that is used by the correlation algorithm 15. The presence of the second case can especially be determined when a lack of correlation is determined for many patients 21. In this case a modified correlation algorithm 20 can be used instead of the correlation algorithm 15 for the analysis for further patients 21. A modification of the correlation algorithm 15, 20 based on the correlation information 17 is schematically indicated in fig. 1 by the arrow 19. Such a modification can e.g. be performed when an average correlation value 24, that will be described with reference to fig. 2, has a very low value for a given brain segment 3.

Approaches for determining a modified correlation algorithm 15, 20 where already discussed in the general part of the description. Any modifications of the correlation algorithm 15, 20 and/or the data on which these modifications are based, e.g. the individual correlation information for a single patient, the average correlation value and/or the membership of the different brain segments 3 in the selected group 8 and/or the correlation results 16 for the respective patient 21 are preferably reviewed by a medical expert, e.g. a radiologist, or a panel of such an experts, prior to modifying the correlation algorithm 15, 20.

Fig. 2 shows the determination of an average correlation value 24 that describes an average correlation between brain segments 3 selected for the first group 8 and therefore brain segments 3 for which an affection is determined by image analysis and the symptoms 12 given by the patient data record 11. For this purpose, a respective image data set 1 is acquired for a multitude of patients 21. A correlation information 17 describing a correlation value 18 for each brain segment 3 in the first group 8, that can e.g. be zero, one or any value in-between, is then determined for each patient 21 as discussed above.

For each relevant brain segment 3, a sub-group 23 of the patients 21 is then selected by only selecting patients 21 for which the selected group 8 of brain segments 3 determined during the determination of the correlation information 17 comprises that specific given brain segment 3.

The correlation values 18 are then added for the patients 21 in the respective sub-group and the sum is divided by the number of patients 21 in the respective sub-group 23 to determine the average correlation value 24 for this sub-group and therefore for this brain segment 3.

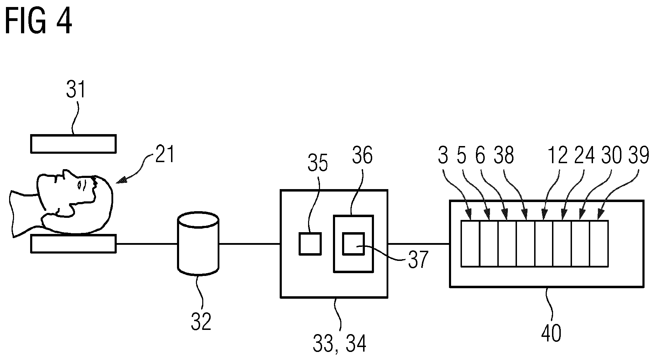

The average correlation value 24 therefore describes, for what fraction of the patients the presence of the respective brain segment 3 in the selected group 8 is explainable by the observed symptoms 12 when an affection of the specific given brain segment was detected by image analysis. This can be considered to be a measure of the reliability of the detection of an affection of this brain segment or can be considered to be a measure for the probability of an affection of a given brain segment causing known symptoms. Such an average correlation value or e.g. a percentage value calculated by multiplying the average correlation value 24 by 100 % is therefore highly relevant for a user and can therefore e.g. be output in conjunction with the absolute and/or relative volume 6 as an output of the image analysis as will be described in more detail later with reference to fig. 4.

A further information that can be highly relevant for the further course of treatment and diagnosis is the average recovery time 30 for an affected brain segment 3. A possible approach for determining the average recovery time 30 is now described with reference to the flowchart shown in fig. 3. In this flowchart, the steps S11 to S16 are performed for each patient 21 individually.

In step S11, a respective image data set 1 concerning the brain 22 of the respective patient 21 is acquired and the time 25 of the acquisition of this image data set 1 is recorded.

In step S12, the first and second group 8 of the brain segments 3 is selected and the correlation results 16 are determined, as previously discussed with reference to fig. 1, especially in the context of determining the correlation information 17 for the respective patient 21 and image data set 1.

In step S13, a further image data set 26 is acquired and the time 27 of the acquisition is recorded. The acquisition of the further image data set 26 is typically performed after several days or weeks to gain information about the progress of the recovery of the patient 21.

In step S14, the selected group 8 of brain segments 3 is determined based on the further image data set 26 by evaluating the selection condition 9 for a respective parameter 7 determined for the respective image segment 2 of the further image data set 26. The determination of the selected group 8 can especially be performed in the context of determining the correlation information 17 for the further image data set 26.

In step S15, a recovery condition 28 is evaluated. The recovery condition is fulfilled or can only fulfilled when the selection condition 9 is not fulfilled for at least one brain segment 3 in the most recently recorded further image data set 26 while this brain segment 3 was selected for the selected group 8 and/or while the correlation results 16 an/or a correlation value 17 for this brain segment 3 fulfilled a condition, e.g. exceeded a threshold, when determining the correlation information 17 for the image data set 1 for the respective patient 21. In other words, the recovery condition 28 can especially be fulfilled when an atrophy or a different affection or a given brain segment 3 is initially detected in the image data set 1 and optionally supported by the symptoms 12 and wen an affection of this brain segment 3 is no longer determined based on the most recently recorded further image data set 26.

When the recovery condition 28 is not fulfilled, the steps S13 and S14 will be repeated after a certain waiting time, e.g. several days or weeks.

When the recovery condition 28 is fulfilled in step S15, an assumed recovery time 29 is determined as the time difference between the time 25 of the acquisition of the image data set 1 and the time 27 of the acquisition of the most recent further image data set 26 for which the recovery condition 28 was fulfilled. The assumed recovery time 29 therefore describes the time difference between the initial detection of an affection of a brain segment 3 and the time at which the patient 21 seems to have recovered from this affection.

In step S17, an average recovery time is calculated by averaging the assumed recovery time 29 for multiple patients 21. Preferably averaging is performed individually for each of the different brain segments 3.

It is also possible to only perform averaging for a sub-group of patients, e.g. for patients in certain regions, in certain age cohorts, having a certain gender and/or being in different treatments regimes. The average recovery time 30 determined for different sub-groups can therefore serve as an important tool for research.

Fig. 4 shows a device 33 for processing a respective three-dimensional medical image data set 1 for at least one patient 21, that comprises means 35, 36 for carrying out at least the method discussed with respect to fig. 1 and preferably also the additional steps discussed with respect to fig. 2 and/or fig. 3. The means 35 is a processor and the means 36 is a memory unit that stores the computer program 37. The device 33 can e.g. be a freely programable data processing unit 34, e.g. a desktop computer, a server or a cloud-based solution, executing the computer program 37 to implement the discussed method.

The image data set 1 can be directly acquired via a medical imaging device 31, e.g. a magnetic resonance tomograph. Especially when image data sets 1 for a multitude of patients 21 are to be analyzed, it is however advantageous, to provide the respective image data set 1 via a storage device 32, e.g. a hard disc or a server.

The determined correlation information 17 and/or information based on the correlation information 17, especially the average correlation value 24, can be output via an output interface, e.g. to a display device 40, to inform a user. In the examples schematically shown in fig. 4, relevant data is output in the form of a table comprising multiple columns.

The first column lists the respective brain segment 3 and the further columns lists further information concerning the respective brain segment 3 given in the first column in the respective line. For a given patient it is e.g. possible to only list brain segments 3 that are members of the selected group 8 and/or for which the correlation results and/or the correlation value fulfil a given condition. The table can optionally be modified by a user, e.g. to add additional brain segments 3 to the list, to delete brain segments 3 and/or to add comments, add potential symptoms, remove symptoms, mark entries, edit values given in the further columns, etc.

In the example shown in fig. 4, the second column lists the absolute volume 5 and the third column lists the relative volume 6 for the given brain segment 3. Both of these values are determined by image analysis for the given patient 21. Alternatively or additionally, any other parameters 7 determined for the respective brain segment 3 could also be listed.

The fourth column lists a normative range 38 for a parameter 7, e.g. the relative volume 6. This allows the user to see a at one glance, if and how far the parameter 7, namely the relative volume, deviates from the normative range 38.

In the fifth column, a list of symptoms 12 that can be caused by an affection of the given brain segment 3 can be given. This list can include all symptoms that could be caused by an affection of that brain segment 3 or only the registered symptoms 12 that are actually described by the patient data record 11 for this patient.

The sixth column lists the average correlation value 24 for the given brain segment 3 or preferably a percentage value that can e.g. be calculated by multiplying the average correlation value 24 by 100 %. This value immediately informs a user, if a value of the parameter 7, e.g. the relative volume 6, that is outside of the given normative range 38 typically strongly correlates with the presence of at least one of the listed symptoms.

The seventh column can list the average recovery time 30 for the given brain segment and the column 39 can comprise controls, e.g. for editing the data for a given brain segment 3 and/or for adding and/or removing brain segments 3 from the table. Once the table is reviewed by the user, it can e.g. be stored for further reference.

Although the present invention has been described in detail with reference to the preferred embodiment, the present invention is not limited by the disclosed examples from which the skilled person is able to derive other variations without departing from the scope of the invention which is defined in the appended claims.

## Claims

1. Computer-implemented method for processing a respective three-dimensional medical image data set (1) for at least one patient (21), wherein the image data set (1) at least partially depicts the brain (22) of the respective patient (21), comprising the steps performed for each patient:
- receiving or acquiring the image data set (1) for the respective patient (21),
- selecting a respective image segment (2) in the image data set (1) that corresponds to a respective one of multiple given brain segments (3),
- determining at least one respective parameter (7) for each selected image segment (2),
- selecting a selected group (8) of brain segments (2) for which a selection condition (9) is fulfilled, wherein the selection condition (9) depends on the parameter (7) determined for the respective image segment (2) corresponding to the respective brain segment (3),
- receiving a patient data record (11) describing the presence of at least one registered symptom (12) for the respective patient (21),
- for each brain segment (3) in the selected group (8) determine a respective correlation result (16) for each registered symptom (12) using a given correlation algorithm (15, 20), and
- determining a correlation information (17) based on the determined correlation results (16).

2. Computer-implemented method according to claim 1, wherein
the correlation information (17) describes a respective correlation value (18) for each brain segment (3) in the selected group (8), wherein either the respective correlation result (16) is a number and the respective correlation value (18) is the sum of the correlation results (16) determined for the respective brain segment (3) or depends on this sum,
or wherein the respective correlation result is a Boolean value and the correlation value is a logical combination of the correlation results (16) determined for the respective brain segment (3).

3. Computer-implemented method according to claim 1 or 2, wherein the parameter (7) is a measure for an absolute volume (5) of the selected image segment (2) or for a relative volume (6) of the selected image segment (2) with respect to at least one further image segment (2), that especially corresponds to the complete brain (22), and/or in that the selection condition (9) is a comparison of the respective parameter (7) with a respective given threshold value (10).

4. Computer-implemented method according to claim 3, wherein the respective threshold value (10) is given based on the patient data record (11) and/or on an age (13) and/or gender (14) of the respective patient (21).

5. Computer-implemented method according to one of the preceding claims, wherein the at least one registered symptom (12) is selected from a list of given symptoms (12), wherein the correlation algorithm (15, 20) prescribes a given correlation result (16) for each of the given symptoms (12) for each given brain segment (3).

6. Computer-implemented method according to claim 5, wherein the sum of the correlation results (16) for all given symptoms (12) for each respective brain segment is the same.

7. Computer-implemented method according to one of the preceding claims, wherein a respective correlation information (17) is determined for multiple patients (21), wherein the respective correlation information (17) describes a respective correlation value (18) for each brain segment (3) in the selected group (8) of brain segments (3), wherein the patients (21) are grouped into multiple subgroups (23), wherein each of the sub-groups (23) corresponds to a specific given brain segment (3) and comprises all patients (21) for which the selected group (8) of brain segments (3) comprises the respective specific given brain segment (3), wherein an average correlation value (24) is determined for each of the sub-groups (23) by adding the correlation values (18) for the respective specific given brain segment (3) for this sub-group (23) and dividing this sum by the number of patients (21) in this subgroup (23).

8. Computer-implemented method according to one of the preceding claims, wherein the determination of the correlation information (17) is repeated using a modified correlation algorithm (20) for at least one further patient (21), wherein the modified correlation algorithm (20) depends on the correlation information (17) and/or the correlation results (16) for the at least one patient (21).

9. Computer-implemented method according to one of the preceding claims, wherein the respective patient data record (11) is processed by natural language processing to determine the presence of the at least one registered symptom (12).

10. Computer-implemented method according to one of the preceding claims, wherein for multiple patients (21) the time (25) of the acquisition of the image data set (1) for the respective patient (21) is recorded and that a respective further image data set (26) is acquired for the same respective patient (21) repeatedly, until a recovery condition (28) is fulfilled, wherein the recovery condition (28) is fulfilled or can only be fulfilled when the selection condition (9) is not fulfilled for at least one brain segment (3) in the most recently recorded further image data set (26) while this brain segment (3) was selected for the selected group (8) and/or the correlation result (3) for this brain segment (3) was equal to a given value or in a given value range when determining the correlation information (17) for the image data set (1) for the same respective patient (21), wherein an assumed recovery time (29) is determined as the time difference between the time (25) of the acquisition of the image dataset (1) and the time (27) of the acquisition of the further image data set (26) for which the recovery condition (28) was fulfilled and wherein an average recovery time (30) is calculated by averaging the assumed recovery times (29) of the multiple patients (21) or a subgroup of the multiple patients (21).

11. Device for processing a respective three-dimensional medical image data set (1) for at least one patient (21), which comprises means (35, 36) for carrying out the computer-implemented method of one of the previous claims.

12. Computer program comprising instructions which, when the program is executed by a data processing unit (34), cause the data processing unit (34) to carry out the computer-implemented method of one of the claims 1 to 10.

13. Computer-readable storage medium having stored thereon the computer program (37) of claim 12.

## Patentansprüche

1. Computerimplementiertes Verfahren zum Verarbeiten eines jeweiligen dreidimensionalen medizinischen Bilddatensatzes (1) für zumindest einen Patienten (21), wobei der Bilddatensatz (1) das Gehirn (22) des jeweiligen Patienten (21) zumindest teilweise abbildet, umfassend die für jeden Patienten durchgeführten Schritte:
- Empfangen oder Erfassen des Bilddatensatzes (1) für den jeweiligen Patienten (21),
- Auswählen eines jeweiligen Bildsegments (2) in dem Bilddatensatz (1), das einem jeweiligen von mehreren gegebenen Hirnsegmenten (3) entspricht,
- Bestimmen zumindest eines jeweiligen Parameters (7) für jedes ausgewählte Bildsegment (2),
- Auswählen einer ausgewählten Gruppe (8) von Hirnsegmenten (2), für die eine Auswahlbedingung (9) erfüllt ist, wobei die Auswahlbedingung (9) von dem Parameter (7) abhängt, der für das jeweilige Bildsegment (2) bestimmt wird, das dem jeweiligen Hirnsegment (3) entspricht,
- Empfangen eines Patientendatensatzes (11), der die Anwesenheit zumindest eines registrierten Symptoms (12) für den jeweiligen Patienten (21) beschreibt,
- Bestimmen eines jeweiligen Korrelationsergebnisses (16) für jedes registrierte Symptom (12) unter Verwendung eines gegebenen Korrelationsalgorithmus (15, 20) für jedes Hirnsegment (3) in der ausgewählten Gruppe (8), und
- Bestimmen einer Korrelationsinformation (17) basierend auf den bestimmten Korrelationsergebnissen (16).

2. Computerimplementiertes Verfahren nach Anspruch 1, wobei die Korrelationsinformation (17) einen jeweiligen Korrelationswert (18) für jedes Hirnsegment (3) in der ausgewählten Gruppe (8) beschreibt, wobei entweder das jeweilige Korrelationsergebnis (16) eine Zahl ist und der jeweilige Korrelationswert (18) die Summe der für das jeweilige Hirnsegment (3) bestimmten Korrelationsergebnisse (16) ist oder von dieser Summe abhängt,
oder wobei das jeweilige Korrelationsergebnis ein boolescher Wert ist und der Korrelationswert eine logische Kombination der für das jeweilige Hirnsegment (3) bestimmten Korrelationsergebnisse (16) ist.

3. Computerimplementiertes Verfahren nach Anspruch 1 oder 2, wobei der Parameter (7) ein Maß für ein absolutes Volumen (5) des ausgewählten Bildsegments (2) oder für ein relatives Volumen (6) des ausgewählten Bildsegments (2) bezogen auf zumindest ein weiteres Bildsegment (2) ist, das insbesondere dem gesamten Gehirn (22) entspricht, und/oder dass die Auswahlbedingung (9) ein Vergleich des jeweiligen Parameters (7) mit einem jeweiligen Schwellenwert (10) ist.

4. Computerimplementiertes Verfahren nach Anspruch 3, wobei der jeweilige Schwellenwert (10) basierend auf dem Patientendatensatz (11) und/oder auf einem Alter (13) und/oder Geschlecht (14) des jeweiligen Patienten (21) gegeben ist.

5. Computerimplementiertes Verfahren nach einem der vorhergehenden Ansprüche, wobei das zumindest eine registrierte Symptom (12) aus einer Liste von gegebenen Symptomen (12) ausgewählt ist, wobei der Korrelationsalgorithmus (15, 20) für jedes der gegebenen Symptome (12) für jedes gegebene Hirnsegment (3) ein gegebenes Korrelationsergebnis (16) vorschreibt.

6. Computerimplementiertes Verfahren nach Anspruch 5, wobei die Summe der Korrelationsergebnisse (16) für alle gegebenen Symptome (12) für jedes jeweilige Hirnsegment gleich ist.

7. Computerimplementiertes Verfahren nach einem der vorhergehenden Ansprüche, wobei eine jeweilige Korrelationsinformation (17) für mehrere Patienten (21) bestimmt wird, wobei die jeweilige Korrelationsinformation (17) einen jeweiligen Korrelationswert (18) für jedes Hirnsegment (3) in der ausgewählten Gruppe (8) von Hirnsegmenten (3) beschreibt, wobei die Patienten (21) in mehrere Untergruppen (23) gruppiert werden, wobei jede der Untergruppen (23) einem spezifischen gegebenen Hirnsegment (3) entspricht und alle Patienten (21) umfasst, für die die ausgewählte Gruppe (8) von Hirnsegmenten (3) das jeweilige spezifische gegebene Hirnsegment (3) umfasst, wobei ein durchschnittlicher Korrelationswert (24) für jede der Untergruppen (23) bestimmt wird, indem die Korrelationswerte (18) für das jeweilige spezifische gegebene Hirnsegment (3) für diese Untergruppe (23) addiert werden und diese Summe durch die Anzahl der Patienten (21) in dieser Untergruppe (23) dividiert wird.

8. Computerimplementiertes Verfahren nach einem der vorhergehenden Ansprüche, wobei die Bestimmung der Korrelationsinformation (17) unter Verwendung eines modifizierten Korrelationsalgorithmus (20) für zumindest einen weiteren Patienten (21) wiederholt wird, wobei der modifizierte Korrelationsalgorithmus (20) von der Korrelationsinformation (17) und/oder den Korrelationsergebnissen (16) für den zumindest einen Patienten (21) abhängt.

9. Computerimplementiertes Verfahren nach einem der vorhergehenden Ansprüche, wobei der jeweilige Patientendatensatz (11) durch natürliche Sprachverarbeitung verarbeitet wird, um das Vorhandensein des zumindest einen registrierten Symptoms (12) zu bestimmen.

10. Computerimplementiertes Verfahren nach einem der vorhergehenden Ansprüche, wobei für mehrere Patienten (21) die Zeit (25) der Erfassung des Bilddatensatzes (1) für den jeweiligen Patienten (21) aufgezeichnet wird, und dass ein jeweiliger weiterer Bilddatensatz (26) für denselben jeweiligen Patienten (21) wiederholt erfasst wird, bis eine Erholungsbedingung (28) erfüllt ist, wobei die Erholungsbedingung (28) erfüllt ist oder nur erfüllt werden kann, wenn die Auswahlbedingung (9) für zumindest ein Hirnsegment (3) in dem zuletzt aufgenommenen weiteren Bilddatensatz (26) nicht erfüllt ist, während dieses Hirnsegment (3) für die ausgewählte Gruppe (8) ausgewählt wurde und/oder das Korrelationsergebnis (3) für dieses Hirnsegment (3) bei der Bestimmung der Korrelationsinformation (17) für den Bilddatensatz (1) für denselben jeweiligen Patienten (21) gleich einem gegebenen Wert oder in einem gegebenen Wertebereich war, wobei eine angenommene Erholungszeit (29) als die Zeitdifferenz zwischen der Zeit (25) der Erfassung des Bilddatensatzes (1) und der Zeit (27) der Erfassung des weiteren Bilddatensatzes (26), für den die Erholungsbedingung (28) erfüllt war, bestimmt wird, und wobei eine durchschnittliche Erholungszeit (30) durch Mitteln der angenommenen Erholungszeiten (29) der mehreren Patienten (21) oder einer Untergruppe der mehreren Patienten (21) berechnet wird.

11. Vorrichtung zur Verarbeitung eines jeweiligen dreidimensionalen medizinischen Bilddatensatzes (1) für zumindest einen Patienten (21), die Mittel (35, 36) zur Durchführung des computerimplementierten Verfahrens nach einem der vorhergehenden Ansprüche umfasst.

12. Computerprogramm, umfassend Anweisungen, die bei Ausführung des Programms durch eine Datenverarbeitungseinheit (34) bewirken, dass die Datenverarbeitungseinheit (34) das computerimplementierte Verfahren nach einem der Ansprüche 1 bis 10 ausführt.

13. Computerlesbares Speichermedium, auf dem das Computerprogramm (37) nach Anspruch 12 gespeichert ist.

## Revendications

1. Procédé mis en œuvre par ordinateur de traitement d'un ensemble (1) respectif de données d'images médicales en trois dimensions pour au moins un patient (21), dans lequel l'ensemble (1) de données d'images dépeint au moins en partie le cerveau (22) du patient (21) respectif, comprenant les stades effectués pour chaque patient :
- recevoir ou acquérir l'ensemble (1) de données d'image pour le patient (21) respectif,
- sélectionner dans l'ensemble (1) de données d'image un segment (2) respectif d'image, qui correspond à l'un respectif de multiples segments (3) donnés du cerveau,
- déterminer au moins un paramètre (7) respectif pour segment (2) sélectionné d'image,
- sélectionner un groupe (8) sélectionné de segments (2) du cerveau pour lesquels une condition (9) de sélection est satisfaite, dans lequel la condition (9) de sélection dépend du paramètre (7) déterminé pour le segment (2) d'image respectif correspondant au segment (3) respectif du cerveau,
- recevoir un enregistrement (11) de données du patient décrivant la présence d'au moins un symptôme (12) enregistré pour le patient (21) respectif,
- pour chaque segment (3) du cerveau dans le groupe (8) sélectionné, déterminer un résultat (16) respectif de corrélation pour chaque symptôme (12) enregistré en utilisant un algorithme (15, 20) de corrélation donné, et
- déterminer une information (17) de corrélation sur la base des résultats (16) de corrélation déterminés.

2. Procédé mis en œuvre par ordinateur suivant la revendication 1, dans lequel l'information (17) de corrélation décrit une valeur (18) respective de corrélation pour chaque segment (3) du cerveau dans le groupe (8) sélectionné, dans lequel soit le résultat (16) respectif de corrélation est un nombre et la valeur (18) respective de corrélation est la somme des résultats (16) de corrélation déterminés pour le segment (3) respectif du cerveau ou dépend de cette somme, soit le résultat respectif de corrélation est une valeur booléenne et la valeur de corrélation est une combinaison logique des résultats (16) de corrélation déterminés pour le segment (3) respectif du cerveau.

3. Procédé mis en œuvre par ordinateur suivant la revendication 1 ou 2, dans lequel le paramètre (7) est une mesure d'un volume (5) absolu du segment (2) sélectionné d'image ou d'un volume (6) relatif du segment (2) sélectionné d'image par rapport à au moins un autre segment (2) d'image, qui correspond spécialement au cerveau (22) complet, et/ou en ce que la condition (9) de sélection est une comparaison du paramètre (7) respectif à une valeur (10) respective de seuil donnée.

4. Procédé mis en œuvre par ordinateur suivant la revendication 3, dans lequel la valeur (10) respective de seuil est donnée sur la base de l'enregistrement (11) de données du patient et/ou d'un âge (13) et/ou d'un genre (14) du patient (21) respectif.

5. Procédé mis en œuvre par ordinateur suivant l'une des revendications précédentes, dans lequel le au moins un symptôme (12) enregistré est sélectionné dans une liste de symptômes (12) donnés, dans lequel l'algorithme (15, 20) de corrélation prescrit un résultat (16) donné de corrélation pour chacun des symptômes (12) donnés pour chaque segment (3) donné du cerveau.

6. Procédé mis en œuvre par ordinateur suivant la revendication 5, dans lequel la somme des résultats (16) de corrélation pour tous les symptômes (12) donnés pour chaque segment respectif du cerveau est la même.

7. Procédé mis en œuvre par ordinateur suivant l'une des revendications précédentes, dans lequel une information (17) respective de corrélation est déterminée pour de multiples patients (21), dans lequel l'information (17) respective de corrélation décrit une valeur (18) de corrélation respective pour chaque segment (3) du cerveau dans le groupe (8) sélectionné de segments (3) du cerveau, dans lequel les patients (21) sont regroupés en de multiples sous-groupes (23), dans lequel chacun des sous-groupes (23) correspond à un segment (3) donné précis du cerveau et comprend tous les patients (21) pour lesquels le groupe (8) sélectionné de segments (3) de cerveau comprend le segment (3) donné précis du cerveau, dans lequel on détermine une valeur (24) de corrélation moyenne pour chacun des sous-groupes (23) en additionnant les valeurs (18) de corrélation pour le segment (3) respectif donné précis du cerveau pour ce sous-groupe (23) et en divisant cette somme par le nombre de patients (21) dans ce sous-groupe (23).

8. Procédé mis en œuvre par ordinateur suivant l'une des revendications précédentes, dans lequel la détermination de l'information (17) de corrélation est répétée en utilisant un algorithme (20) de corrélation modifié pour au moins un autre patient (21), dans lequel l'algorithme (20) de corrélation modifié dépend de l'information (17) de corrélation et/ou des résultats (16) de corrélation pour le au moins un patient (21).

9. Procédé mis en œuvre par ordinateur suivant l'une des revendications précédentes, dans lequel l'enregistrement (11) respectif de données du patient est traité par un traitement en langage naturel afin de déterminer la présence du au moins un symptôme (12) enregistré.

10. Procédé mis en œuvre par ordinateur suivant l'une des revendications précédentes, dans lequel, pour de multiples patients (21), on enregistre le temps (25) d'acquisition de l'ensemble (1) de données d'image pour le patient (21) respectif et en ce que l'on acquiert un autre ensemble (26) respectif de données d'image pour le même patient (21) respectif d'une manière répétée, jusqu'à ce qu'une condition (28) de rétablissement soit satisfaite, dans lequel la condition (28) de rétablissement est satisfaite ou peut être satisfaite seulement lorsque la condition (9) de sélection n'est pas satisfaite pour au moins un segment (3) du cerveau dans l'autre ensemble (26) de données d'image enregistré le plus récemment, alors que ce segment (3) du cerveau était sélectionné pour le groupe (8) sélectionné et/ou que résultat (3) de corrélation pour ce segment (3) du cerveau était égale à une valeur donnée ou dans une plage de valeurs donnée lors de la détermination de l'information (17) de corrélation pour l'ensemble (1) de données d'image pour le même patient (21) respectif, dans lequel un temps (29) de rétablissement assumé et déterminé comme la différence de temps entre le temps (25) de l'acquisition de l'ensemble (1) de données d'image et le temps (27) de l'acquisition de l'autre ensemble (26) de données d'image, pour lequel la condition (28) de rétablissement était satisfaite et dans lequel un temps (30) moyen de rétablissement est calculé en faisant la moyenne des temps (29) de rétablissement assumés des multiples patients (21) ou d'un sous-groupe des multiples patients (21).

11. Dispositif de traitement d'un ensemble (1) respectif de données d'images médicales en trois dimensions pour au moins un patient (21), qui comprend des moyens (35, 36) pour effectuer le procédé mis en œuvre par ordinateur de l'une des revendications précédentes.

12. Programme d'ordinateur comprenant des instructions qui, lorsque le programme est exécuté par une unité (34) de traitement de données, font que l'unité (34) de traitement de données exécutent le procédé mis en œuvre par ordinateur des revendications 1 à 10.

13. Support de mémoire, déchiffrable par ordinateur, sur lequel est mis en mémoire le programme (37) d'ordinateur de la revendication 12.
